# EUROPEAN PATENT APPLICATION

(11) **EP 4 852 540 A1**
(43) Date of publication of application: **09.12.2026**
(21) Application number: 24920910.7
(22) Date of filing: 31.01.2024
(51) Int. Cl.: H04W 52/18

(54) **POWER INFORMATION REPORTING METHOD, TERMINAL, NETWORK DEVICE, SYSTEM AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2024/075068
(87) International publication number: WO 2025/160843

(57) **Abstract**

The present disclosure relates to a power information reporting method, a terminal, a network device, a system and a storage medium. The method comprises: receiving first configuration information sent by a network device, wherein the first configuration information comprises reference signal resource configuration information, and a reference signal resource configured by using the reference signal resource configuration information corresponds to a plurality of ports or a plurality of port groups; determining power information of at least one of the plurality of ports, or determining power information of at least one of the plurality of port groups; and sending the power information to the network device. Thus, power information of each port is reported by means of a terminal, and a network device determines the channel states between different ports and the terminal on the basis of the power information, such that the network device can carry out power distribution on the different ports on the basis of the channel states, thereby improving the transmission performance of the terminal.

## Description

### TECHNICAL FIELD

The present disclosure relates to the field of wireless communication technology, and in particular, to a power information reporting method, a terminal, a network device, a system, and a storage medium.

### BACKGROUND

To improve spectral efficiency, in a multiple-input multiple-output (MIMO) wireless communication system, high frequency bands and a large-scale antenna arrays have been introduced. A large-scale antenna array can provide enhanced beamforming gain, thereby effectively compensating for the transmission loss caused by the high frequency band communications.

### SUMMARY

To overcome the technical problem of inaccurate power allocation in the related art, the present disclosure provides a power information reporting method, a terminal, a network device, a system, and a storage medium.

According to a first aspect of the embodiments of the present disclosure, there is provided a power information reporting method performed by a terminal, including:
receiving first configuration information transmitted by a network device, where the first configuration information includes reference signal resource configuration information, and a reference signal resource configured by the reference signal resource configuration information corresponds to a plurality of ports or a plurality of port groups;
determining power information of at least one port among the plurality of ports or of at least one port group among the plurality of port groups; and
transmitting the power information to the network device.

According to a second aspect of the embodiments of the present disclosure, there is provided a power information reporting method performed by a network device, including:
transmitting first configuration information to a terminal, where the first configuration information includes reference signal resource configuration information, a reference signal resource configured by the reference signal resource configuration information corresponds to a plurality of ports or a plurality of port groups, and the first configuration information is configured to instruct the terminal to determine power information of at least one port among the plurality of ports or of at least one port group among the plurality of port groups; and
receiving the power information transmitted by the terminal.

According to a third aspect of the embodiments of the present disclosure, there is provided a power information reporting method, including:
transmitting, by a network device, first configuration information to a terminal, where the first configuration information includes reference signal resource configuration information, and a reference signal resource configured by the reference signal resource configuration information corresponds to a plurality of ports or a plurality of port groups;
determining, by the terminal, power information of at least one port among the plurality of ports or of at least one port group among the plurality of port groups; and
transmitting, by the terminal, the power information to the network device.

According to a fourth aspect of the embodiments of the present disclosure, there is provided a terminal, including:
a first transceiver module, configured to receive first configuration information transmitted by a network device, where the first configuration information includes reference signal resource configuration information, and a reference signal resource configured by the reference signal resource configuration information corresponds to a plurality of ports or a plurality of port groups;
a processing module, configured to determine power information of at least one port among the plurality of ports or of at least one port group among the plurality of port groups; and
a second transceiver module, configured to transmit the power information to the network device.

According to a fifth aspect of the embodiments of the present disclosure, there is provided a network device, including:
a third transceiver module, configured to transmit first configuration information to a terminal, where the first configuration information includes reference signal resource configuration information, a reference signal resource configured by the reference signal resource configuration information corresponds to a plurality of ports or a plurality of port groups, and the first configuration information is configured to instruct the terminal to determine power information of at least one port among the plurality of ports or of at least one port group among the plurality of port groups; and
a fourth transceiver module, configured to receive the power information transmitted by the terminal.

According to a sixth aspect of the embodiments of the present disclosure, there is provided a terminal, including:
one or more processors,
where the terminal is configured to perform the power information reporting method according to any one of embodiments in the first aspect of the present disclosure.

According to a seventh aspect of the embodiments of the present disclosure, there is provided a network device, including:
one or more processors,
where the network device is configured to perform the power information reporting method according to any one of embodiments in the second aspect of the present disclosure.

According to an eighth aspect of the embodiments of the present disclosure, there is provided a communication system, including a terminal and a network device, where the terminal is configured to implement the power information reporting method according to any one of embodiments in the first aspect of the present disclosure, and the network device is configured to implement the power information reporting method according to embodiments in the second aspect of the present disclosure.

According to a ninth aspect of the embodiments of the present disclosure, there is provided a storage medium having instructions stored therein that, when executed on a communication device, cause the communication device to perform the power information reporting method according to any one of embodiments in the first aspect of the present disclosure, or to perform the power information reporting method according to embodiments in the second aspect of the present disclosure.

According to a tenth aspect of the embodiments of the present disclosure, there is provided a computer program and/or instructions that, when executed by a communication device, the communication device implements the power information reporting method according to an optional implementation of the first aspect or the second aspect.

In the foregoing solution, by receiving the first configuration information transmitted by a network device and including the reference signal resource configuration information where a reference signal resource configured by the reference signal resource configuration information corresponds to a plurality of ports or a plurality of port groups; determining the power information of at least one port among the plurality of ports or of at least one port group among the plurality of port groups; and transmitting the power information to the network device, it allows the terminal to report the power information of each port and the network device to determine, based on the power information, a channel state between each port and the terminal, such that the network device can perform power allocation for different ports based on the channel state, thereby improving transmission performance of the terminal.

### BRIEF DESCRIPTION OF THE DRAWINGS

A brief description will be made to the accompanying drawings as required in embodiments, to illustrate the technical solutions in the embodiments of the disclosure more clearly. However, the accompanying drawings set forth in the following description merely illustrate some embodiments of the disclosure, and shall not limit the protection scope thereof.
FIG. 1a is a schematic diagram illustrating an architecture of a communication system according to an embodiment of the disclosure.
FIG. 1b is a schematic diagram illustrating electromagnetic field division according to an embodiment of the present disclosure.
FIG. 1c is a schematic diagram illustrating a near-field UE and a far-field UE receiving electromagnetic waves according to an embodiment of the present disclosure.
FIG. 2 is an interactive schematic diagram illustrating a power information reporting method according to an embodiment of the present disclosure.
FIG. 3 is a flowchart illustrating a power information reporting method according to an embodiment of the present disclosure.
FIG. 4 is a flowchart illustrating a power information reporting method according to an embodiment of the present disclosure.
FIG. 5 is a flowchart illustrating a power information reporting method according to an embodiment of the present disclosure.
FIG. 6 is a block diagram illustrating a structure of a terminal according to an embodiment of the present disclosure.
FIG. 7 is a block diagram illustrating a structure of a network device according to an embodiment of the present disclosure.
FIG. 8 is a block diagram illustrating a structure of a communication device 8100 according to an embodiment of the present disclosure.
FIG. 9 is a block diagram illustrating a structure of a chip 8200 according to an embodiment of the present disclosure.

### DETAILED DESCRIPTION

The present disclosure provides in embodiments a power information reporting method, a terminal, a network device, a system, and a storage medium.

In a first aspect, provided in embodiments of the present disclosure is a power information reporting method performed by a terminal, including:
receiving first configuration information transmitted by a network device, where the first configuration information includes reference signal resource configuration information, and a reference signal resource configured by the reference signal resource configuration information corresponds to a plurality of ports or a plurality of port groups;
determining power information of at least one port among the plurality of ports or of at least one port group among the plurality of port groups; and
transmitting the power information to the network device.

In the foregoing solution, by reporting, by the terminal, the power information of each port, the network device determines, based on the power information, a channel state between each port and the terminal, such that the network device can perform power allocation for different ports based on the channel state, thereby improving transmission performance of the terminal.

In combination with some embodiments of the first aspect, the power information includes first power information, including layer 1 reference signal received power (L1-RSRP) information or layer 1 signal to interference noise ratio (L1-SINR) information.

In combination with some embodiments of the first aspect, the power information includes a first index and an absolute value of the first power information, where the first index is an index of a port corresponding to a strongest instance of the first power information or an index of a port group corresponding to the strongest instance of the first power information, among at least one instance of the first power information included in the power information, and the absolute value of the first power information is an absolute value of the strongest instance of the first power information.

In combination with some embodiments of the first aspect, the power information includes a relative value of the first power information, the relative value of the first power information is a relative value of first power information between the strongest instance of the first power information and any other instance of the first power information, among the at least one instance of the first power information included in the power information, and the relative value of the first power information corresponds to a second index including an index of a port or an index of a port group.

In combination with some embodiments of the first aspect, the power information includes the second index.

In combination with some embodiments of the first aspect, the power information includes at least one relative value of the first power information, and a bit position of the relative value of the first power information in the power information is determined based on the second index corresponding to the relative value of the first power information.

In combination with some embodiments of the first aspect, the power information excludes second power information, where the second power information is first power information with a value less than or equal to a first threshold.

In combination with some embodiments of the first aspect, the power information includes first bit sequence information, configured to indicate a reporting status of the at least one instance of the first power information corresponding to at least one index respectively, where the at least one index includes a port index or a port group index.

In combination with some embodiments of the first aspect, the power information includes an amplitude coefficient.

In combination with some embodiments of the first aspect, the power information includes a first index being an index corresponding to a port or a port group having a largest amplitude coefficient.

In combination with some embodiments of the first aspect, the amplitude coefficient includes a second amplitude coefficient, the second amplitude coefficient corresponds to a second index, the second index is an index other than the first index, among at least one index, and the second index includes an index of a port or an index of a port group.

In combination with some embodiments of the first aspect, a bit position of the second amplitude coefficient in the power information is determined based on the second index corresponding to the second amplitude coefficient.

In combination with some embodiments of the first aspect, the power information excludes a third amplitude coefficient, where the third amplitude coefficient is an amplitude coefficient less than or equal to a second threshold.

In combination with some embodiments of the first aspect, the power information includes second bit sequence information, configured to indicate a reporting status of an amplitude coefficient corresponding to an index among at least one index, where the index includes an index of a port or an index of a port group.

In combination with some embodiments of the first aspect, the power information is contained in first precoding matrix indicator (PMI) information of a channel state information (CSI) report.

In combination with some embodiments of the first aspect, the power information is contained in second PMI information of a type I codebook and/or the power information is contained in second PMI information of a type II codebook.

In combination with some embodiments of the first aspect, a first report corresponding to the power information and a PMI report are independent of each other.

In combination with some embodiments of the first aspect, the power information is contained in a beam report.

In a second aspect, provided in embodiments of the present disclosure is a power information reporting method performed by a network device, including:
transmitting first configuration information to a terminal, where the first configuration information includes reference signal resource configuration information, a reference signal resource configured by the reference signal resource configuration information corresponds to a plurality of ports or a plurality of port groups, and the first configuration information is configured to instruct the terminal to determine power information of at least one port among the plurality of ports or of at least one port group among the plurality of port groups; and
receiving the power information transmitted by the terminal.

In combination with some embodiments of the second aspect, the power information includes first power information, including layer 1 reference signal received power (L1-RSRP) information or layer 1 signal to interference noise ratio (L1-SINR) information.

In combination with some embodiments of the second aspect, the power information includes a first index and an absolute value of the first power information, where the first index is an index of a port corresponding to a strongest instance of the first power information or an index of a port group corresponding to the strongest instance of the first power information, among at least one instance of the first power information included in the power information, and the absolute value of the first power information is an absolute value of the strongest instance of the first power information.

In combination with some embodiments of the second aspect, the power information includes a relative value of the first power information, the relative value of the first power information is a relative value of first power information between the strongest instance of the first power information and any other instance of the first power information, among the at least one instance of the first power information included in the power information, and the relative value of the first power information corresponds to a second index including an index of a port or an index of a port group.

In combination with some embodiments of the second aspect, the power information includes the second index.

In combination with some embodiments of the second aspect, the power information includes at least one relative value of the first power information, and a bit position of the relative value of the first power information in the power information is determined based on the second index corresponding to the relative value of the first power information.

In combination with some embodiments of the second aspect, the power information excludes second power information, where the second power information is first power information with a value less than or equal to a first threshold.

In combination with some embodiments of the second aspect, the power information includes first bit sequence information, configured to indicate a reporting status of the at least one instance of the first power information corresponding to at least one index respectively, where the at least one index includes a port index or a port group index.

In combination with some embodiments of the second aspect, the power information includes an amplitude coefficient.

In combination with some embodiments of the second aspect, the power information includes a first index being an index corresponding to a port or a port group having a largest amplitude coefficient.

In combination with some embodiments of the second aspect, the amplitude coefficient includes a second amplitude coefficient, the second amplitude coefficient corresponds to a second index, the second index is an index other than the first index, among at least one index, and the second index includes an index of a port or an index of a port group.

In combination with some embodiments of the second aspect, a bit position of the second amplitude coefficient in the power information is determined based on the second index corresponding to the second amplitude coefficient.

In combination with some embodiments of the second aspect, the power information excludes a third amplitude coefficient, where the third amplitude coefficient is an amplitude coefficient less than or equal to a second threshold.

In combination with some embodiments of the second aspect, the power information includes second bit sequence information, configured to indicate a reporting status of an amplitude coefficient corresponding to an index among at least one index, where the index includes an index of a port or an index of a port group.

In combination with some embodiments of the second aspect, the power information is contained in first precoding matrix indicator (PMI) information of a channel state information (CSI) report.

In combination with some embodiments of the second aspect, the power information is contained in second PMI information of a type I codebook and/or the power information is contained in second PMI information of a type II codebook.

In combination with some embodiments of the second aspect, a first report corresponding to the power information and a PMI report are independent of each other.

In combination with some embodiments of the second aspect, the power information is contained in a beam report.

In a third aspect, provided in embodiments of the present disclosure is a power information reporting method, including:
transmitting, by a network device, first configuration information to a terminal, where the first configuration information includes reference signal resource configuration information, and a reference signal resource configured by the reference signal resource configuration information corresponds to a plurality of ports or a plurality of port groups;
determining, by the terminal, power information of at least one port among the plurality of ports or of at least one port group among the plurality of port groups; and
transmitting, by the terminal, the power information to the network device.

In a fourth aspect, provided in embodiments of the present disclosure is a terminal, including:
a first transceiver module, configured to receive first configuration information transmitted by a network device, where the first configuration information includes reference signal resource configuration information, and a reference signal resource configured by the reference signal resource configuration information corresponds to a plurality of ports or a plurality of port groups;
a processing module, configured to determine power information of at least one port among the plurality of ports or of at least one port group among the plurality of port groups; and
a second transceiver module, configured to transmit the power information to the network device.

In a fifth aspect, provided in embodiments of the present disclosure is a network device, including:
a third transceiver module, configured to transmit first configuration information to a terminal, where the first configuration information includes reference signal resource configuration information, a reference signal resource configured by the reference signal resource configuration information corresponds to a plurality of ports or a plurality of port groups, and the first configuration information is configured to instruct the terminal to determine power information of at least one port among the plurality of ports or of at least one port group among the plurality of port groups; and
a fourth transceiver module, configured to receive the power information transmitted by the terminal.

In a sixth aspect, provided in embodiments of the present disclosure is a terminal, including:
one or more processors,
where the terminal is configured to perform the power information reporting method according to any one of embodiments in the first aspect of the present disclosure.

In a seventh aspect, provided in embodiments of the present disclosure is a network device, including:
one or more processors,
where the network device is configured to perform the power information reporting method according to any one of embodiments in the second aspect of the present disclosure.

In an eighth aspect, provided in embodiments of the present disclosure is a communication system, including a terminal and a network device, where the terminal is configured to implement the power information reporting method according to any one of embodiments in the first aspect of the present disclosure, and the network device is configured to implement the power information reporting method according to embodiments in the second aspect of the present disclosure.

In a ninth aspect, provided in embodiments of the present disclosure is a storage medium having instructions stored therein that, when executed on a communication device, cause the communication device to perform the power information reporting method according to any one of embodiments in the first aspect of the present disclosure, or to perform the power information reporting method according to embodiments in the second aspect of the present disclosure.

In a tenth aspect, provided in embodiments of the present disclosure is a computer program and/or instructions that, when executed by a communication device, the communication device implements the power information reporting method according to an optional implementation of the first aspect or the second aspect.

According to the above solutions, a network device transmits to a terminal the first configuration information including the reference signal resource configuration information, where a reference signal resource configured by the reference signal resource configuration information corresponds to a plurality of ports or a plurality of port groups, and the terminal determines the power information of at least one port among the plurality of ports or of at least one port group among the plurality of port groups, and transmits the power information to the network device. In this way, by reporting, by the terminal, the power information of each port, the network device determines, based on the power information, a channel state between each port and the terminal, such that the network device can perform power allocation for different ports based on the channel state, thereby improving transmission performance of the terminal.

The present disclosure provides in embodiments a power information reporting method, a terminal, a network device, a system, and a storage medium. In some embodiments, the terms such as "power information reporting method", "information processing method" and "communication method" may be interchangeable, the terms such as "terminal", "information processing apparatus" and "communication apparatus" may be interchangeable, and the terms such as "information processing system" and "communication system" may be interchangeable.

The embodiments of the disclosure are not exhaustive, but are only illustrative of some embodiments, and are not intended to be a specific limitation on the scope of protection of the disclosure. Without any contradiction, each step in a certain embodiment may be implemented as an independent embodiment, and the steps may be arbitrarily combined. For example, a solution after removing some steps in a certain embodiment may also be implemented as an independent embodiment, and the order of the steps in a certain embodiment may be arbitrarily exchanged. In addition, the optional implementation methods in a certain embodiment may be arbitrarily combined. In addition, the embodiments may be arbitrarily combined. For example, some or all of the steps of different embodiments may be arbitrarily combined, and a certain embodiment may be arbitrarily combined with the optional implementation methods of other embodiments.

In each embodiment of the disclosure, unless otherwise specified or there is a logical conflict, the terms and/or descriptions between the embodiments are consistent and reference may be made to each other, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a," "an," "the," "above," "said," "aforementioned," "this" or the like may refer to "one and only one," "one or more," "at least one" or the like. For example, when using articles such as "a," "an," "the"" in English translation, the noun after the article may be understood as either a singular expression or a plural expression.

In the embodiments of the disclosure, "a plurality of" refers to two or more.

In some embodiments, the terms "at least one of," "one or more," "a plurality of," "multiple" or the like may be used interchangeably.

In the embodiments of the disclosure, descriptions such as "at least one of A or B", "A and/or B", "in one case, then A; in another case, then B", "in response to a case A, in response to another case B", may, depending on the context, include the following technical solutions: executing A regardless of B, that is, in some embodiments, A; executing B regardless of A, that is, in some embodiments, B; selectively executing A or B, that is, in some embodiments, one is selected from A and B to be executed; executing both A and B, that is, in some embodiments, both A and B are executed. The same applies similarly when there are more branches such as A, B, C, etc.

In some embodiments, descriptions such as "A or B" may, depending on the context, include the following technical solutions: executing A regardless of B, that is, in some embodiments, A; executing B regardless of A, that is, in some embodiments, B; selectively executing A or B, that is, in some embodiments, one is selected from A and B to be executed. The same applies similarly when there are more branches such as A, B, C, etc.

The prefixes such as "first" and "second" in the embodiments of the disclosure are only used to distinguish different described objects, and are not used as restrictions on the position, order, priority, quantity or content of the described objects. The statement of the described object refers to the description in the context of the claims or embodiments, and should not constitute unnecessary restrictions due to the use of prefixes. For example, if the described object is a "field", the ordinal number before the "field" in "the first field" and "the second field" does not limit the position or order between the fields, and the "first" and "second" are not used to have a limitation on whether the fields modified by these terms are in the same message, nor are they used to have a limitation on the order of "the first field" and "the second field". As another example, if the described object is a "level", the ordinal number before the "level" in "the first level" and "the second level" does not limit the priority between the levels. As another example, the number of described objects is not limited by the ordinal number and may be one or more. Taking "the first apparatus" as an example, the number of apparatus may be one or more. In addition, the objects modified by different prefixes may be the same or different. For example, if the described object is "apparatus," "the first apparatus" and "the second apparatus" may be the same apparatus or different apparatus, and their types may be the same or different. As another example, if the described object is "information," "the first information" and "the second information" may be the same information or different information, and their contents may be the same or different.

In some embodiments, "including A," "containing A," "configured to indicate A," and "carrying A" may be interpreted as directly "carrying A" or "indirectly indicating A".

In some embodiments, terms such as "greater than," "greater than or equal to," "not less than," "more than," "more than or equal to," "not smaller than," "higher than," "higher than or equal to," "not lower than," and "above" may be used interchangeably. Terms such as "smaller than," "smaller than or equal to," "not greater than," "less than," "less than or equal to," "not more than," "lower than," "lower than or equal to," "not higher than," and "below" may be used interchangeably.

In some embodiments, an apparatus may be interpreted as physical or virtual, and its name is not limited to the names mentioned in the embodiments, such as "apparatus," "equipment," "device," "circuit," "network element," "node," "function," "unit," "section," "system," "network," "chip," "chip system," "entity," and "subject," which may be used interchangeably.

In some embodiments, the term "network" may be interpreted as devices included in the network (e.g., access network device, core network device or the like).

In some embodiments, the following terms may be used interchangeably: "access network device (AN device)," "radio access network device (RAN device)," "base station (BS)," "radio base station," "fixed station," "node," "access point," "transmission point (TP)," "reception point (RP)," "transmission/reception point (TRP)," "panel," "antenna panel," "antenna array," "cell," "macro cell," "small cell," "femto cell," "pico cell," "sector," "cell group," "serving cell," "carrier," "component carrier," "bandwidth part (BWP)" and so on.

In some embodiments, the following terms may be used interchangeably: "terminal," "terminal device," "user equipment (UE)," "user terminal," "mobile station (MS)," "mobile terminal (MT)," "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client "and so on.

In some embodiments, the access network device, the core network device, or the network device may be replaced by a terminal. For example, the communication between the access network device, the core network device or the network device and the terminal is replaced by a structure of the communication between multiple terminals (for example, also referred to as device-to-device (D2D), vehicle-to-everything (V2X), or the like), or may use various embodiments of the disclosure. In this case, it may also be set as a structure in which the terminal has all or part of the functions of the access network device. In addition, terms such as "uplink" and "downlink" may also be replaced by terms corresponding to the communication between terminals (for example, "side"). For example, "uplink channel", "downlink channel" or the like may be replaced by "side channel", and "uplink," "downlink" or the like may be replaced by "side link".

In some embodiments, the terminal may be replaced by an access network device, a core network device or a network device. In this case, the access network device, the core network device or the network device may also be configured to have a structure that has all or part of the functions of the terminal.

In some embodiments, the acquisition of data, information or the like may comply with the laws and regulations of the country where the data is obtained.

In some embodiments, data, information or the like may be obtained with the consent of the user.

In addition, each element, each row or each column in the table of the embodiments of the disclosure may be implemented as an independent embodiment, and the combination of any elements, any rows or any columns may also be implemented as an independent embodiment.

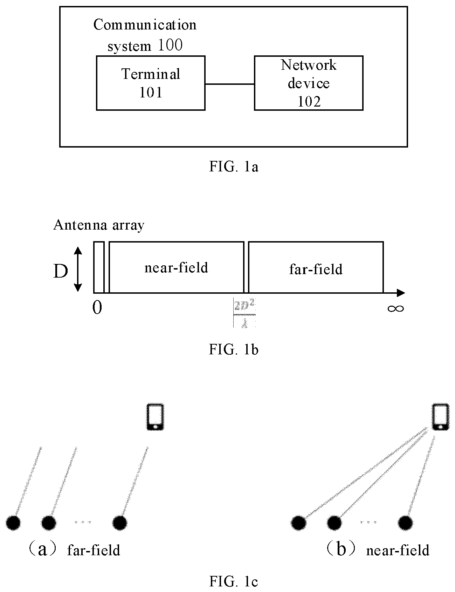

FIG. 1a is a schematic diagram illustrating an architecture of a communication system according to an embodiment of the disclosure. As illustrated in FIG. 1a, a communication system 100 includes a terminal 101 and a network device 102.

In some embodiments, the terminal 101 includes, but is not limited to, for example, at least one of a mobile phone, a wearable device, an internet of things device, a vehicle with communication function, a smart vehicle, a tablet computer (Pad), a computer with wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city or a wireless terminal in smart home.

In some embodiments, the network device 102 is for example a node or device that accesses a terminal to a wireless network. The access network device may include, but is not limited to, at least one of: an evolved NodeB (eNB), a next generation evolved NodeB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system.

In some embodiments, the technical solution of the disclosure may be applicable to the Open RAN architecture. In this case, the interfaces between or within the access network devices involved in the embodiments of the disclosure may become internal interfaces of the Open RAN, and the processes and information interactions between these internal interfaces may be implemented through software or programs.

In some embodiments, the network device may be composed of a centralized unit (central unit, CU) and a distributed unit (DU), in which the CU may also be referred to as a control unit. The CU-DU structure may be used to split the protocol layer of the access network device, with some functions of the protocol layer being centrally controlled by the CU, and the remaining part or all of the functions of the protocol layer being distributed in the DU. The DU is centrally controlled by the CU. The disclosure is not limited to this.

It would be understood that the communication system described in the embodiments of the disclosure is for the purpose of more clearly illustrating the technical solutions of the embodiments of the disclosure, and does not constitute a limitation on the technical solutions of the embodiments of the disclosure. A person skilled in the art may know that with the evolution of the system architecture and the emergence of new business scenarios, the technical solutions of the embodiments of the disclosure are also applicable to similar technical problems.

The following embodiments of the disclosure may be applied to the communication system 100 illustrated in FIG. 1a or part of the subject, but the disclosure are not limited to the above. The subjects illustrated in FIG. 1a are examples, and the communication system may include all or some of the subjects in FIG. 1a or may include other subjects other than FIG. 1a. The number and form of the subjects are arbitrary, and each subject may be physical or virtual. The connection relationship between the subjects is an example. For example, the subjects may be connected or disconnected, and the connection may be in any manner, which may be a direct connection or an indirect connection and may be a wired connection or a wireless connection.

The embodiments of the disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), Global System for Mobile communications (GSM^{TM}), CDMA2000, Ultra Mobile Broadband (UMB), IEEE 802.11 (Wi-Fi^{TM}), IEEE 802.16 (WiMAX^{TM}), IEEE 802.20, Ultra-WideBand (UWB), Bluetooth^{TM}, Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, multiple systems may also be combined (for example, a combination of LTE or LTE-A and 5G, etc.) for application.

In some embodiments, for a communication system provided with an antenna array (whose antenna aperture is D), an electromagnetic (EM) field thereof may be divided into a near field and a far field. Illustratively, FIG. 1b is a schematic diagram of electromagnetic field division according to an embodiment of the present disclosure. As shown in FIG. 1b, a region near an electromagnetic field source, within several times the wavelength of the source, is referred to as the near field, in which the propagation of the electromagnetic field is mainly subject to the direct action of electric charges and electric currents, and the electromagnetic field in the near field gradually weakens as the distance increases and exhibits a complex electromagnetic field distribution; a region far from the field source, within several times or several tens of times the wavelength of the source, is referred to as the far field, in which the propagation of the electromagnetic field is mainly a radiation field, and the electromagnetic field in the far field is characterized by significant wave nature and follows the propagation law of radiation waves. Illustratively, in this embodiment, the boundary between the near field and the far field under the same electromagnetic field source is the Rayleigh distance $\frac{2 {D}^{2}}{λ}$, where D is the antenna aperture of the antenna array corresponding to the electromagnetic field source, and λ is the wavelength of the electromagnetic field source.

In some embodiments, a far-field UE (user equipment) and a near-field UE receive electromagnetic waves from the antenna array of the electromagnetic field source at different times and phases. Illustratively, FIG. 1c is a schematic diagram of a near-field UE and a far-field UE receiving electromagnetic waves according to an embodiment of the present disclosure. In the electromagnetic waves transmitted by the electromagnetic field source, the size of the near-field region depends on the antenna aperture (D) and the wavelength (λ); the region from the electromagnetic field source to the Rayleigh distance $\frac{2 {D}^{2}}{λ}$ is the near field, and the region from the Rayleigh distance to the farthest distance that the electromagnetic field source can propagate is the far field. In this embodiment, the electromagnetic field source is an electromagnetic field source of multipath propagation. For a UE located in the far field, the electromagnetic waves that arrive at the UE from different antenna ports or antenna elements thereof are plane waves, and a beam for the UE is a two-dimensional (2D) directional beam directed to the target UE; for any one path in multipath propagation MIMO, the times and phases at which the electromagnetic waves arrive at the receive antenna array of the UE are equally spaced, as shown in (a) of FIG. 1c. For a UE located in the near field, the electromagnetic waves received by the UE are spherical waves, and a beam for the UE is a three-dimensional (3D) beam that arrives at the UE in a surrounding manner. For any one path in multipath propagation, the times and phases at which the electromagnetic waves arrive at the receive antenna array of the UE are no longer equally spaced, as shown in (b) of FIG. 1c. In case that the UE is located in the near field, for any one path in multipath propagation, the times and phases at which the electromagnetic waves arrive at the receive antenna array of the UE are no longer equally spaced, which causes differences in the transmission power required by different paths in the near-field UE.

In some embodiments, in a Type I codebook corresponding to 5G NR, since only far-field UEs are considered, where the distances from different ports to a UE may be approximately the same, with a DFT (Discrete Fourier Transformation) beam, the transmit powers of the different ports are all the same. However, for a near-field UE, the differences in the distances from different ports to the UE will be relatively large, so the differences in the powers arriving at the terminal from different ports are also relatively large. If the network device still transmits power based on the same amplitude for each port, then for a port with a better channel, this means that such a port is not better utilized, while for a port with a poor channel, there is a certain waste of power for the power transmission on this port. Illustratively, this embodiment provides port-based power information reporting, where the power information may be an absolute value and/or a relative value of L1-RSRP (Layer 1 Reference Signal Received Power) of each port or each port group reported by the terminal, or an amplitude coefficient of each port reported by the terminal, such that the network device can determine, based on the power reporting information, a channel state between each port and the terminal, and perform power allocation based on the channel state, thereby improving the transmission performance of the near-field terminal.

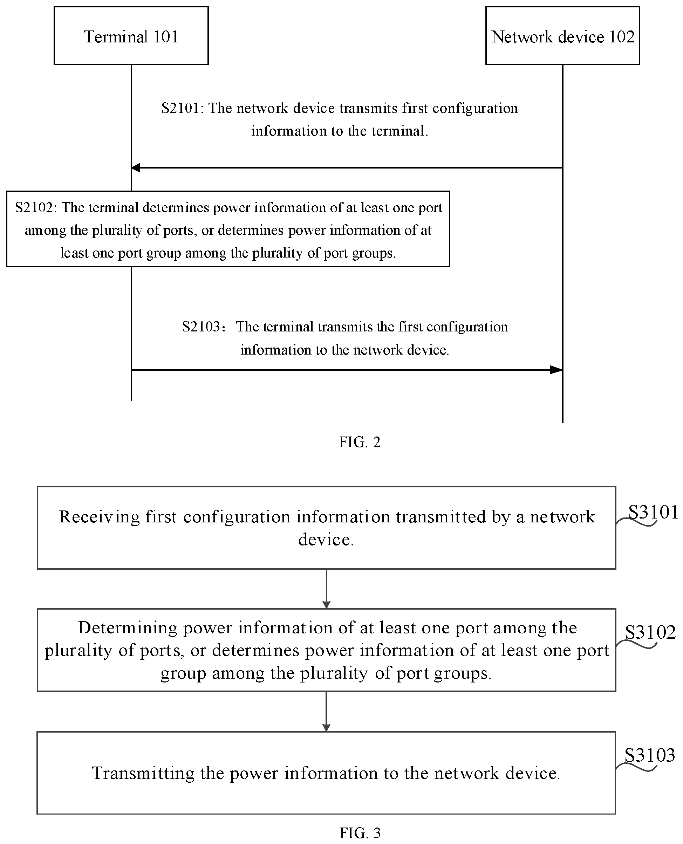

FIG. 2 is an interactive schematic diagram illustrating a power information reporting method according to an embodiment of the present disclosure. As shown in FIG. 2, an embodiment of the present disclosure relates to a power information reporting method, which is performed by a terminal and a network device, including the following steps.

Step S2101: The network device transmits first configuration information.

In some embodiments, the first configuration information includes reference signal resource configuration information. Illustratively, the reference signal resource configuration information is information used to configure relevant parameters and an allocation manner of a reference signal in a wireless communication system, where the reference signal is an important signal for a UE for signal reception and demodulation, and the reference signal resource configuration information includes frequency resource configuration, time domain configuration, and antenna port configuration of the reference signal, a corresponding mapping relationship therebetween, and the like. By means of the reference signal resource configuration information, it is possible to implement allocation and scheduling of the reference signal, so as to ensure normal operation of the wireless network, thereby improving communication efficiency and performance. In a wireless communication system, the reference signal resource configuration information is generally transmitted by a base station to a UE through signaling, and may be dynamically adjusted according to different radio resource configuration manners, so as to satisfy different communication requirements and network optimization.

In some embodiments, the name of the reference signal resource configuration information is not limited, and it may be, for example, "configuration information", "resource indication information", "reference signal indication information", or the like.

In some embodiments, a reference signal resource configured by the reference signal resource configuration information corresponds to a plurality of ports or a plurality of port groups. Illustratively, the wireless communication system in this embodiment is a multipath multi-transmission communication system, the reference signal resource in the communication system may correspond to a plurality of antenna ports or a plurality of antenna port groups, and one or more reference signal resources may be mapped to a plurality of antenna ports or antenna port groups, so as to support multi-antenna transmission and Multiple-Input Multiple-Output (MIMO) technology. For configuring the reference signal resource configuration information, information about the antenna ports or antenna port groups to which the reference signal resource is mapped needs to be specified, including the number of antenna ports, a polarization manner, a resource allocation manner, and the like. This is useful for the system to implement technologies such as spatial multiplexing and beamforming in wireless communication, thereby improving the transmission efficiency and coverage of signals. By configuring the reference signal resource to correspond to a plurality of ports or a plurality of port groups, the performance of the multi-antenna system can be better utilized, thus to increase the capacity and coverage of the communication system, thereby improving user experience and network performance.

In some embodiments, the times and phases at which the far-field UE correspondingly receives the antenna array are equally spaced, and the electromagnetic field source may evenly divide the transmit power based on the position of the far-field UE during allocating transmit power to the far-field UE. However, for the near-field UE where the distances from different ports to the UE are different and unevenly distributed, the near-field UE therefore needs to report power information to assist the network device in allocating transmit power. Illustratively, in this embodiment, the UE that reports the power information is a near-field UE located within the near-field region of the electromagnetic field source.

Step S2102: The terminal determines power information of at least one port among the plurality of ports, or determines power information of at least one port group among the plurality of port groups.

Illustratively, in this embodiment, a port in the terminal refers to a virtual connection point on an antenna, which corresponds to one or more antenna elements on the antenna, such as an antenna sub-array, a monopole, or a polarizer. Each antenna port corresponds to a specific signal transmission path, through which a wireless signal may be transmitted and received. In a MIMO (Multiple-Input Multiple-Output) system, different antenna ports may be used to transmit and receive independent data streams, so as to implement spatial diversity and multi-antenna transmission. A port group refers to a set of antenna ports that work together, as a port group, to transmit or receive signals to or from a wireless channel. In the MIMO system, a port group is generally used to describe signals transmitted from a plurality of antenna ports, and to describe an antenna configuration used in spatial diversity and beamforming process. Configuring the port group properly will realize more effective utilization of the wireless channel.

Illustratively, upon receiving the first configuration information transmitted by the network device, the terminal, in response to the first configuration information, determines power information of at least one port among the plurality of ports in the terminal, or determines power information of at least one port group among the plurality of port groups. The power information is configured to indicate respective channel states between the terminal and different ports or different port groups.

In some embodiments, the power information includes first power information.

Illustratively, the power information includes first power information, which is configured to indicate channel quality of at least one port or channel quality of at least one port group currently corresponding to the UE.

In some embodiments, the name of the power information is not limited, and it may be, for example, power indication information, channel quality information, channel state information, received power information, or the like.

In some embodiments, the first power information includes layer 1 reference signal received power (L1-RSRP) information or layer 1 signal to interference noise ratio (L1-SINR) information. The L1-RSRP information refers to an RSRP metric of a reference signal that the terminal receives from the network device, which is measured and reported at the first layer (L1) of the physical layer protocol stack. The RSRP represents the power of the reference signal received by the terminal, and is used to evaluate the quality of a signal received by a mobile phone, which is useful to determine whether the strength of the signal is sufficient to support reliable communication. The L1-SINR information is a physical layer (L1) signal to interference plus noise ratio (SINR), and the SINR is a ratio of received signal power to interference plus noise power, which may represent the quality of the received signal. A higher SINR generally indicates better signal quality, whereas a lower SINR generally leads to degraded communication performance. The L1-SINR may provide more comprehensive signal quality information, including signal strength and interference level. The network device and the terminal use the L1-SINR to make decisions for radio resource allocation, beamforming, power control, and other wireless network optimization and management. In system planning, optimization, and troubleshooting, the L1-SINR information is also a very important parameter. It should be noted that, in this embodiment, the signal type of the first power information is not limited, and it may be various signal types configured to indicate received signal power in an antenna port or an antenna port group.

In some embodiments, the power information includes a first index and an absolute value of the first power information, where the first index is an index of a port corresponding to a strongest instance of the first power information or an index of a port group corresponding to the strongest instance of the first power information, among at least one instance of the first power information included in the power information, and the absolute value of the first power information is an absolute value of the strongest instance of the first power information.

Illustratively, the power information includes the first index and the absolute value of the first power information. In response to the first configuration information, the terminal measures the power reception of the plurality of ports or the plurality of port groups corresponding to the reference signal resource, and determines one or more power values respectively corresponding to at least one port or at least one port group. An absolute value of the strongest instance of the first power information among the plurality of power values is the absolute value of the first power information, a port corresponding to the absolute value of the first power information is a first port, and an index of the first port is the first index. For example, in response to the first configuration information, the terminal measures and determines a plurality of instances of power information, i.e., the L1-RSRP of at least one port or the L1-RSRP of one port group, including: the L1-RSRP of port 1, -63dBm; the L1-RSRP of port 2, -55dBm; the L1-RSRP of port 3, -98dBm; the L1-RSRP of port 4, -100dBm; and the L1-RSRP of port 5, -63dBm. For the first index and the absolute value of the first power information in the power information, it is determined the L1-RSRP corresponding to port 2 as the strongest instance of the first power information, and thus the power information includes the index of port 2 as the first index, and the absolute value of L1-RSRP being the strongest L1-RSRP corresponding to port 2, which is -55dBm.

In some embodiments, the absolute value of the first power information is quantized by a first bit.

Illustratively, the absolute value of the first power information may be quantized by 7-bit. In a communication system, performing 7-bit quantization on the absolute value of the first power information can reduce the bandwidth required for transmitting and processing the value; 7-bit quantization can make the processing of the absolute value of the first power information simpler and more efficient; and 7-bit quantization ensures compatibility of data between different devices and systems. The 7-bit quantization is a process of mapping a value in a continuous range to a value in a discrete, smaller range. In this process, the absolute value of the first power information is usually converted, by rounding down or rounding off, into a 7-bit binary number. In this representation manner, the maximum value is 127 (1111111), and the minimum value is 0 (0000000). In a communication system, 7-bit quantization is generally used to quantize a continuous analog signal into a digital signal, or to compress a large range of data into a small range of data, thereby saving bandwidth and storage space.

In some embodiments, the power information includes a relative value of the first power information, the relative value of the first power information is a relative value of first power information between the strongest instance of the first power information and any other instance of the first power information, among the at least one instance of the first power information included in the power information, and the relative value of the first power information corresponds to a second index including an index of a port or an index of a port group.

Illustratively, on the basis that the power information reported by the terminal includes the first index and the absolute value of the first power information, the reported power information may further include a relative value of the first power information, which is a relative value of first power information between the strongest instance of the first power information and any other instance of the first power information, among the at least one instance of the first power information included in the power information. That is, in this embodiment, upon reporting the absolute value of the strongest instance of the first power information and the first index of the strongest instance of the first power information, it is further needed to report in the power information a relative value between the strongest instance of the first power information and any other instance of the first power information measured by the terminal.

It should be noted that, in this embodiment, in case that the power information includes L1-RSRP information, the value range of the L1-RSRP information is -50dBm to -120dBm, the absolute value of the first power information is the value of the strongest instance of the first power information, and the relative value of the first power information is a difference between the strongest instance of the first power information and the first power information corresponding to another port. For example, the terminal corresponds to the L1-RSRP of port 1, -63 dBm; the L1-RSRP of port 2, -55 dBm; the L1-RSRP of port 3, -98 dBm; and the L1-RSRP of port 4, -100 dBm, where the strongest instance of the first power information is the L1-RSRP corresponding to port 2, whose absolute value is -55 dBm, and then the relative value of port#1 is -63 dBm - (-55 dBm) = -8 dB; alternatively, the relative value of port#1 may also be -55 dBm - (-63 dBm) = 8 dB.

Optionally, in some embodiments, the power information includes a second index.

Illustratively, the relative value of the first power information corresponds to the second index, which may be an index of a port or an index of a port group. In the communication system of this embodiment, no reporting rule is configured, and in order to facilitate the network device in distinguishing different second ports corresponding to the relative values of the first power information, along with reporting the relative value of the first power information, the second index corresponding to the relative value of the first power information is reported.

In some embodiments, the power information includes at least one relative value of the first power information, and a bit position of the relative value of the first power information in the power information is determined based on the second index corresponding to the relative value of the first power information.

Illustratively, in this embodiment, the power information includes at least one relative value of first power information, and with bit-quantization on the power information by the first bits, the bit position of the relative value of the first power information in the power information is determined based on the second index corresponding to the relative value of the first power information. In the communication system, it may determine, by a protocol, an arrangement order of the relative values of the first power information in the terminal and the network device. Illustratively, based on port numbers or port group numbers, the relative values of the first power information corresponding to the respective ports or port groups may be arranged in descending order according to the port numbers or the port group numbers, or arranged in ascending order according to the port numbers or the port group numbers.

For example, the reference signal resource corresponds to 8 ports: port#0, port#1, port#2, port#3, port#4, port#5, port#6, and port#7, and a port corresponding to the strongest instance of the first power information is port#4. Then, after quantizing the power information by the first bit information, the order of the corresponding bit information is: the first index (port#4), the absolute value of the first power information (the absolute value of the power information corresponding to port#4), the relative value of port#0, the relative value of port#1, the relative value of port#2, the relative value of port#3, the relative value of port#5, the relative value of port#6, and the relative value of port#7. The relative values of port#0 to port#7 (excluding port#4) are arranged in an order of the corresponding port numbers. It should be noted that, in this embodiment, it may use a setting of a protocol to determine an arrangement order of the relative values of the first power information corresponding to the other ports in the power information, and the network device may determine, based on the arrangement order of the relative value of port#x reported in the power information, that the relative value of port#x is a relative value between the first power information of which one port and the strongest instance of the first power information.

In some embodiments, the power information excludes second power information, where the second power information is first power information with a value less than or equal to a first threshold.

Illustratively, in response to the first configuration information, the terminal determines power information of at least one port or at least one port group, and judges the power information of each port or each port group; if the second power information corresponding to a second port is less than or equal to the first threshold, then the second power information is not included in the reported power information. Upon receiving the reported power information, in case of determining that the reported power information does not include the first power information corresponding to such a port, the network device identifies that the first power information of this port is less than or equal to the first threshold.

Optionally, in some embodiments, in case that the terminal determines the second power information corresponding to the second port being lower than the first threshold, the first threshold may be taken as the reported first power information corresponding to the second port, and a relative value between the first threshold and the strongest instance of the first power information may be taken as the relative value of the first power information of the second port. After quantizing this relative value of the first power information, this quantized relative threshold is reported.

In some embodiments, the power information includes first bit sequence information, configured to indicate a reporting status of the at least one instance of the first power information corresponding to at least one index respectively, where the at least one index includes a port index or a port group index.

Illustratively, if some instances of the first power information in the terminal satisfies the foregoing first threshold, that is, there is first power information corresponding to some ports that is not reported, it is needed to include the first bit sequence information in the power information, to indicate the reporting status of the first power information corresponding to each port index in the power information. For example, a value of each bit position in the first bit sequence information is used to indicate the reporting status of the first power information at a corresponding bit position, where the length of the first bit sequence information may be the total number of ports in the terminal or the total number of ports minus 1. In case that the bit length of the first bit sequence information is the total number of ports, the first bit position represents the reporting status of the first power information of port number 1, where the value of this bit being "0" indicates that the first power information on this port number corresponding to this bit is not reported, while the value of this bit being "1" indicates that the first power information on this port number corresponding to this bit is reported. In case that the bit length of the first bit sequence information is the total number of ports minus 1, it indicates that the strongest instance of the first power information will definitely be reported, and therefore the bit position of the port number corresponding to the strongest instance of the first power information is omitted from the first bit sequence information.

In some embodiments, the terminal corresponds to 8 ports, port#0, port#1, port#2, port#3, port#4, port#5, port#6, and port#7, and the first index corresponding to the strongest instance of the first power information is port#4, where the first power information of port#0 and port#7 is less than the first threshold, and therefore port#0 and port#7 are not reported; the length of the first bit sequence information is the total number of ports, and the relative values of the first power information are reported in an order of the port numbers. Then, the bit sequence information corresponding to the power information is in order #1: the first index (port#4), the absolute value of the strongest instance of the first power information, the first bit sequence information (a bit sequence for indicating the reporting status of the first power information of each port) 01111110 (the bit number is the same as the total number of ports, i.e., 8 bits), the relative value of port#1, the relative value of port#2, the relative value of port#3, the relative value of port#5, and the relative value of port#6. Illustratively, in case that the length of the first bit sequence information is the total number of ports minus 1, then, based on the foregoing 8 ports corresponding to the terminal, the bit sequence order #1 corresponding to the power information may also be: the first index (port#4), the absolute value of the strongest instance of the first power information, the first bit sequence information (a bit sequence for indicating the reporting status of the first power information of each port) 0111110 (the bit number is the total number of ports minus 1, i.e., 7 bits), the relative value of port#1, the relative value of port#2, the relative value of port#3, the relative value of port#5, and the relative value of port#6. In this case, the bit position corresponding to port#4 is omitted from the first bit sequence information.

Alternatively, in some embodiments, the bit sequence information corresponding to the power information may also be in order #2: the first bit sequence information (a bit sequence for indicating the reporting status of the first power information of each port) 01111110 (the bit number is the same as the total number of ports, i.e., 8 bits), the first index (port#4), the absolute value of the strongest instance of the first power information, the relative value of port#2, the relative value of port#3, the relative value of port#5, and the relative value of port#6. Optionally, if the length of the first bit sequence information is the total number of ports minus 1, it may likewise omit the bit position corresponding to port#4 from the first bit sequence information, and the first bit sequence information in order #2 may refer to the first bit sequence information of order #1 above, and details are not repeated herein.

The difference between order #2 and order #1 lies in that, in order #2, the first bit sequence information is placed before the first index. Therefore, the bit sequence needs to include the bit position for the first index. Since the first index is indicated after the bit sequence, the number of bits required for indicating the first index may be reduced, because it only needs to be selected from the ports that are actually reported. For example, if order #2 indicates that only 4 ports are to be reported, the first index requires only 2 bits, i.e., it is selected from the 4 reported ports. In contrast, in order #1, since the first index is placed before the bit sequence, it requires 3 bits to select from all 8 ports. In that case, the bit sequence, for indicating which ports the power information will be subsequently reported for, may be shortened by one bit.

In some embodiments, the power information includes an amplitude coefficient.

Illustratively, an amplitude coefficient generally refers to a coefficient used, in signal processing or system analysis, to represent an amplitude gain or attenuation of a signal or a system. The amplitude coefficient may refer to some common parameters, such as a gain, an attenuation, an amplification factor, or an amplitude coefficient. It may be used to describe a transfer function, a gain of a system, or an amplitude change of a signal after being processed. In a communication system, an amplitude coefficient is often used to represent the strength of a signal; for example, the modulation depth in amplitude modulation is an amplitude coefficient that describes a change in the amplitude of a carrier. In filter design, an amplitude coefficient also reflects the gain or attenuation of a filter at different frequencies. In response to the first configuration information, the terminal determines amplitude coefficients of at least one port or at least one port group corresponding to the reference signal resource, and then reports the amplitude coefficients through the power information. That is, the terminal reports a ratio value of power corresponding to at least one port or at least one port group.

In some embodiments, the power information includes a first index being an index corresponding to a port or a port group having a largest amplitude coefficient.

Illustratively, the amplitude coefficient corresponds to the foregoing strongest instance of the first power information, and among the at least one port or the at least one port group corresponding to the reference signal resource, a port having a largest amplitude coefficient is the same as the port corresponding to the strongest instance of the first power information.

Illustratively, the power information includes the first index corresponding to the port having the largest amplitude coefficient. The maximum value of the amplitude coefficient is preset to 1 by a protocol, and the amplitude coefficients corresponding to the other ports in the terminal are all less than 1. In this case, the number of bits required for reporting the first index is related to the total number of ports; for example, when the total number of ports is 8, the number of bits required for reporting the first index is 3.

In some embodiments, the amplitude coefficient includes a second amplitude coefficient, the second amplitude coefficient corresponds to a second index, the second index is an index other than the first index, among at least one index, and the second index includes an index of a port or an index of a port group.

Illustratively, the power information includes the first index corresponding to the strongest amplitude coefficient, and further includes a second amplitude coefficient corresponding to a port other than the port the first index corresponding to and a second index corresponding to the second amplitude coefficient. By the same logic as the foregoing reporting of the relative value of the first power information, in this embodiment, in order to enable the network device to determine channel state information between other ports in the terminal and the terminal, it is needed to report the second amplitude coefficients of the other ports, and, in order to distinguish the second amplitude coefficients of the respective ports, the second indexes of the ports corresponding to the second amplitude coefficients need to be reported.

Illustratively, in some embodiments, the power information includes the first index corresponding to the strongest amplitude coefficient, and when reporting the amplitude coefficients, the amplitude coefficients include a second amplitude coefficient, which is a relative value with respect to the strongest amplitude coefficient of 1, where the relative value is a positive number less than 1. For example, the terminal corresponds to 8 ports, port#0, port#1, port#2, port#3, port#4, port#5, port#6, and port#7, where the first index corresponding to the strongest amplitude coefficient is port#4, and then the reported power information is: port#4, a relative value of the amplitude coefficient of port#0, a relative value of the amplitude coefficient of port#1, a relative value of the amplitude coefficient of port#2, a relative value of the amplitude coefficient of port#3, a relative value of the amplitude coefficient of port#5, a relative value of the amplitude coefficient of port#6, and a relative value of the amplitude coefficient of port#7. When reporting the second amplitude coefficients, the corresponding relative values of the amplitude coefficient may be reported sequentially in an order of the second indexes.

Optionally, in some embodiments, the power information further includes the second index of the port corresponding to the second amplitude coefficient, that is, in addition to the first index corresponding to the strongest coefficient, the reported power information further includes a second index of at least one other port or at least one other port group corresponding to the second amplitude coefficient, where the second index is an index of at least one port or an index of at least one port group.

Optionally, it may also only report the second amplitude coefficients in one-to-one correspondence with the other ports, without reporting the second indexes corresponding to the second amplitude coefficients, to report the second amplitude coefficients in an order of the port numbers.

In some embodiments, a bit position of the second amplitude coefficient in the power information is determined based on the second index corresponding to the second amplitude coefficient.

Illustratively, in this embodiment, the second amplitude coefficient corresponding to the second index may be quantized via setting a protocol. For example, the second amplitude coefficient may be quantized into: ${\left(\frac{1}{64}\right)}^{1 / 2} , {\left(\frac{1}{32}\right)}^{1 / 2}$, ${\left(\frac{1}{16}\right)}^{1 / 2} , {\left(\frac{1}{8}\right)}^{1 / 2} , {\left(\frac{1}{4}\right)}^{1 / 2} , {\left(\frac{1}{2}\right)}^{1 / 2}$, and 0. Different bit values are used to correspond to different second amplitude coefficients. The bit position of the second amplitude coefficient in the power information is determined based on the second index corresponding to the second amplitude coefficient.

In some embodiments, the power information excludes a third amplitude coefficient, where the third amplitude coefficient is an amplitude coefficient less than or equal to a second threshold.

Illustratively, a second threshold is set for the amplitude coefficient, and upon determining the second amplitude coefficient of at least one port or at least one port group, the terminal compares the second amplitude coefficient with the second threshold. In case of determining that a third amplitude coefficient, out of the second amplitude coefficients, that is less than the second threshold, this third amplitude coefficient is not reported in the power information.

Optionally, in case that the third amplitude coefficient exists among the second amplitude coefficients determined by the terminal, it may also perform a bit-quantization on the second threshold, and take the bit-quantized value as a quantized value of the third amplitude coefficient, to report this quantized value through the power information.

In some embodiments, the power information includes second bit sequence information, configured to indicate a reporting status of an amplitude coefficient corresponding to an index among at least one index, where the index includes an index of a port or an index of a port group.

Illustratively, in case that there is the third amplitude coefficient that is not reported, the power information includes the second bit sequence information, which is configured to indicate a reporting status of an amplitude coefficient corresponding to an index among at least one index. Similar to the foregoing first bit sequence information, the second bit sequence information is configured to indicate which ports' amplitude coefficients are reported and which ports' amplitude coefficients are not reported in the power information. Likewise, it may also use "0" to indicate that the amplitude coefficient of a corresponding port is not reported, and "1" to indicate that the amplitude coefficient of a corresponding port is reported.

In some embodiments, in case that each second amplitude coefficient in the power information needs to be reported, the power information includes the first index corresponding to the largest amplitude coefficient and the second amplitude coefficient of the other port, and the corresponding reporting order of the power information is order #0: the first index, and the second amplitude coefficient. In case that there is the third amplitude coefficient that does not need to be reported in the power information, the power information includes the first index corresponding to the largest amplitude coefficient, the second amplitude coefficient of the other port, and the second bit sequence information; after bit-quantizing the power information, the order of the corresponding bit information is order #1: the first index, the second bit sequence information, and the second amplitude coefficient. In case of the second amplitude coefficient including a plurality of amplitude coefficients, the second amplitude coefficients are reported in an order of the corresponding port numbers. For example, for port#0, port#1, port#2, port#3, port#4, port#5, port#6, and port#7, where the first index is port#4, and port#0 and port#7 are not reported, the bit information order #1 is: port#4, 01111110 (the bit number is the same as the total number of ports, i.e., 8 bits), the amplitude coefficient of port#1, the amplitude coefficient of port#2, the amplitude coefficient of port#3, the amplitude coefficient of port#5, and the amplitude coefficient of port#6. Alternatively, in case of the length of the second bit sequence information being the total number of ports minus 1, then, based on the 8 ports corresponding to the foregoing terminal, the bit sequence order #1 corresponding to the power information may also be: port#4, 0111110 (the bit number is the total number of ports minus 1, i.e., 7 bits), the amplitude coefficient of port#1, the amplitude coefficient of port#2, the amplitude coefficient of port#3, the amplitude coefficient of port#5, and the amplitude coefficient of port#6. In this case, the bit position corresponding to port#4 is omitted from the first bit sequence information.

Optionally, In case that there is the third amplitude coefficient that does not need to be reported in the power information, the power information includes the first index corresponding to the largest amplitude coefficient, the second amplitude coefficient of the other port, and the second bit sequence information; after bit-quantizing the power information, the order of the corresponding bit information may also be order #2: 01111110 (the bit number is the same as the total number of ports, i.e., 8 bits), the first index, the amplitude coefficient of port#1, the amplitude coefficient of port#2, the amplitude coefficient of port#3, the amplitude coefficient of port#5, and the amplitude coefficient of port#6. The difference in configuration between the foregoing order #1 and order #2 and the reason for doing so are the same as that of order #1 and order #2 in the foregoing first bit sequence, to which reference may be made, and details are not repeated herein.

In some embodiments, the power information is contained in first precoding matrix indicator (PMI) information of a channel state information (CSI) report.

In some embodiments, the power information is contained in second PMI information of a type I codebook and/or the power information is contained in second PMI information of a type II codebook.

In some embodiments, a first report corresponding to the power information and a PMI report are independent of each other.

In some embodiments, the power information is contained in a beam report.

Step S2103: The power information is transmitted to the network device.

Illustratively, the terminal transmits the power information to the network device. By reporting the power information corresponding to each port from the terminal, the base station is provided with channel state information between different ports or different port groups and the terminal, enabling the base station to better perform power allocation among different ports or different port groups based on the channel state information, thereby improving the transmission performance of the near-field terminal.

In the above solution, by receiving the first configuration information transmitted by a network device and including therein the reference signal resource configuration information where a reference signal resource configured by the reference signal resource configuration information corresponds to a plurality of ports or a plurality of port groups; determining the power information of at least one port among the plurality of ports or of at least one port group among the plurality of port groups based on the first configuration information; and transmitting the power information to the network device, it allows the terminal to report the power information of each port and the network device to determine, based on the power information, a channel state between each port and the terminal, such that the network device can perform power allocation for different ports based on the channel state, thereby improving transmission performance of the terminal.

In some embodiments, the name of information is not limited to names mentioned in the embodiments. The following terms may be used interchangeably: "information," "message," "signal," "signaling," "report," "configuration," "indication," "instruction," "command," "channel," "parameter," "domain," "field," "symbol," "code element/symbol," "codebook," "codeword," "codepoint," "bit," "data," "program," "chip" and so on.

In some embodiments, terms such as "codebook", "codeword", and "precoding matrix" may be interchanged with each other. For example, a codebook may be a set of one or more codewords/precoding matrices.

In some embodiments, terms such as "uplink," "up-link" and "physical uplink" may be used interchangeably. Terms such as "downlink," "down-link" and "physical downlink" may be used interchangeably. Terms such as "side," "side link," "side communication," "side link communication," "direct connection," "direct link," "direct communication" and "direct link communication" may be used interchangeable.

In some embodiments, terms such as "downlink control information (DCI)," "downlink (DL) assignment," "DL DCI," "uplink (UL) grant," and "UL DCI" may be used interchangeably.

In some embodiments, terms such as "physical downlink shared channel (PDSCH)," "DL data" and the like may be used interchangeably, and terms such as "physical uplink shared channel (PUSCH)," "UL data" and the like may be used interchangeably.

In some embodiments, terms such as "radio", "wireless", "radio access network (RAN)", "access network (AN)", and "RAN-based" may be interchanged with each other.

In some embodiments, terms such as "moment," "time point," "time" and "time position" may be interchangeable, and terms such as "duration," "period," "time window," "window" and "time" may be interchangeable.

In some embodiments, terms such as "resource block (RB)", "physical resource block (PRB)", "sub-carrier group (SCG)", "resource element group (REG)", "PRB pair", "RB pair", "resource element (RE)", and "sub-carrier" may be interchanged with each other.

In some embodiments, terms such as "wireless access scheme" and "waveform" may be interchanged with each other.

In some embodiments, terms such as "precoding," "precoder," "weight," "precoding weight," "quasi-co-location (QCL)," "transmission configuration indication (TCI) state," "spatial relation," "spatial domain filter," "transmission power," "phase rotation," "antenna port," "antenna port group," "layer," "the number of layers," "rank," "resource," "resource set," "resource group," "beam," "beam width," "beam angular degree," "antenna," "antenna element" and "panel" may be used interchangeably.

In some embodiments, terms "obtain," "acquire," "get," "receive," "transmit," "bidirectional transmission" and "send" and/or "receive" may be interchangeable, which may be interpreted as receiving from other entities, obtaining from a protocol, obtaining from upper layers, obtaining by self-processing, autonomous implementation, etc.

In some embodiments, terms such as "sending," "launching," "reporting," "issuing," "transmitting," "bidirectional transmission" and "sending" and/or "receiving" may be used interchangeably.

In some embodiments, terms such as "certain", "preseted", "preset", "set", "indicated", "a certain", "any", "first", etc. may be used interchangeably. Terms such as "certain A", "preseted A", "preset A", "set A", "indicated A", "a certain A", "any A", "first A" may be interpreted as A predefined in a protocol or the like, or as A obtained through setting, configuration, indication, etc., or as certain A, a certain A, any A, or first A, etc., but are not limited to these interpretations.

In some embodiments, the "judging" or "estimating" may be represented as, but is not limited to, a value (such as 0 or 1) of 1 bit, as a true value or a false value (Boolean value), or as a comparison of numerical values (for example, comparison with a predetermined value).

In some embodiments, "not expecting to receive" may be interpreted as not receiving on time domain resources and/or frequency domain resources, or as not performing any subsequent processing on the data after receiving the data. "Not expecting to send" may be interpreted as not sending, or as sending but not expecting the recipient to respond to the sent content.

In some embodiments, other optional implementations described before or after the description corresponding to FIG. 2 may be referred to.

FIG. 3 is a schematic flowchart illustrating a power information reporting method according to an embodiment of the present disclosure. As shown in FIG. 3, embodiments of the disclosure relate to a power information reporting method, which includes the followings steps.

Step S3101: Receiving first configuration information transmitted by a network device.

In some embodiments, the first configuration information includes reference signal resource configuration information. Illustratively, the reference signal resource configuration information is information used to configure relevant parameters and an allocation manner of a reference signal in a wireless communication system, where the reference signal is an important signal for a UE for signal reception and demodulation, and the reference signal resource configuration information includes frequency resource configuration, time domain configuration, and antenna port configuration of the reference signal, a corresponding mapping relationship therebetween, and the like. By means of the reference signal resource configuration information, it is possible to implement allocation and scheduling of the reference signal, so as to ensure normal operation of the wireless network, thereby improving communication efficiency and performance. In a wireless communication system, the reference signal resource configuration information is generally transmitted by a base station to a UE through signaling broadcasting, and may be dynamically adjusted according to different radio resource configuration manners, so as to satisfy different communication requirements and network optimization.

In some embodiments, the name of the reference signal resource configuration information is not limited, and it may be, for example, "configuration information", "resource indication information", "reference signal indication information", or the like.

For optional implementations of step S3101, reference may be made to the optional implementation of step S2101 in FIG. 2, as well as other related parts in the embodiments involved in FIG. 2, which will not be elaborated herein.

Step S3102: Determining power information of at least one port among the plurality of ports, or determines power information of at least one port group among the plurality of port groups.

In some embodiments, the power information includes first power information, including layer 1 reference signal received power (L1-RSRP) information or layer 1 signal to interference noise ratio (L1-SINR) information.

In some embodiments, the power information includes a first index and an absolute value of the first power information, where the first index is an index of a port corresponding to a strongest instance of the first power information or an index of a port group corresponding to the strongest instance of the first power information, among at least one instance of the first power information included in the power information, and the absolute value of the first power information is an absolute value of the strongest instance of the first power information.

In some embodiments, the power information includes a relative value of the first power information, the relative value of the first power information is a relative value of first power information between the strongest instance of the first power information and any other instance of the first power information, among the at least one instance of the first power information included in the power information, and the relative value of the first power information corresponds to a second index including an index of a port or an index of a port group.

In some embodiments, the power information includes the second index.

In some embodiments, the power information includes at least one relative value of the first power information, and a bit position of the relative value of the first power information in the power information is determined based on the second index corresponding to the relative value of the first power information.

In some embodiments, the power information excludes second power information, where the second power information is first power information with a value less than or equal to a first threshold.

In some embodiments, the power information includes first bit sequence information, configured to indicate a reporting status of the at least one instance of the first power information corresponding to at least one index respectively, where the at least one index includes a port index or a port group index.

In some embodiments, the power information includes an amplitude coefficient.

In some embodiments, the power information includes a first index being an index corresponding to a port or a port group having a largest amplitude coefficient.

In some embodiments, the amplitude coefficient includes a second amplitude coefficient, the second amplitude coefficient corresponds to a second index, the second index is an index other than the first index, among at least one index, and the second index includes an index of a port or an index of a port group.

In some embodiments, a bit position of the second amplitude coefficient in the power information is determined based on the second index corresponding to the second amplitude coefficient.

In some embodiments, the power information excludes a third amplitude coefficient, where the third amplitude coefficient is an amplitude coefficient less than or equal to a second threshold.

In some embodiments, the power information includes second bit sequence information, configured to indicate a reporting status of an amplitude coefficient corresponding to an index among at least one index, where the index includes an index of a port or an index of a port group.

In some embodiments, the power information is contained in first precoding matrix indicator (PMI) information of a channel state information (CSI) report.

In some embodiments, the power information is contained in second PMI information of a type I codebook and/or the power information is contained in second PMI information of a type II codebook.

In some embodiments, a first report corresponding to the power information and a PMI report are independent of each other.

In some embodiments, the power information is contained in a beam report.

For optional implementations of step S3102, reference may be made to the optional implementation of step S2102 in FIG. 2, as well as other related parts in the embodiments involved in FIG. 2, which will not be elaborated herein.

Step S3103: Transmitting the power information to the network device.

Illustratively, the terminal transmits the power information to the network device. By reporting the power information corresponding to each port from the terminal, the base station is provided with channel state information between different ports or different port groups and the terminal, enabling the base station to better perform power allocation among different ports or different port groups based on the channel state information, thereby improving the transmission performance of the near-field terminal.

For optional implementations of step S3103, reference may be made to the optional implementation of step S2103 in FIG. 2, as well as other related parts in the embodiments involved in FIG. 2, which will not be elaborated herein.

In the above solution, by receiving the first configuration information transmitted by a network device and including therein the reference signal resource configuration information where a reference signal resource configured by the reference signal resource configuration information corresponds to a plurality of ports or a plurality of port groups; determining the power information of at least one port among the plurality of ports or of at least one port group among the plurality of port groups based on the first configuration information; and transmitting the power information to the network device, it allows the terminal to report the power information of each port and the network device to determine, based on the power information, a channel state between each port and the terminal, such that the network device can perform power allocation for different ports based on the channel state, thereby improving transmission performance of the terminal.

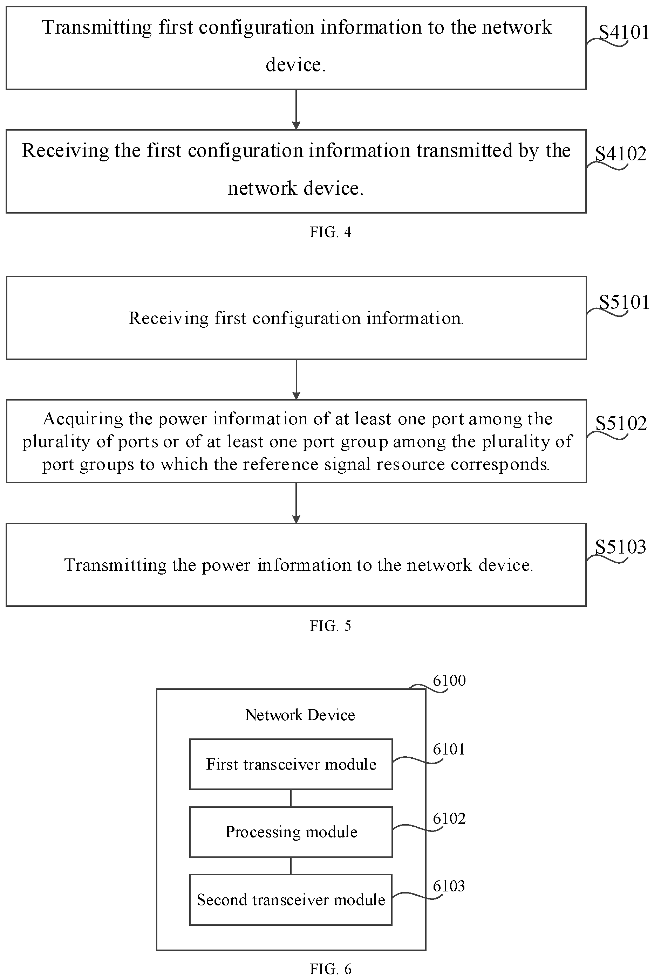

FIG. 4 is a schematic flowchart illustrating a power information reporting method according to an embodiment of the present disclosure. As shown in FIG. 4, an embodiment of the present disclosure relates to a power information reporting method, which is performed by a network device, including the following steps.

Step S4101: Transmitting first configuration information to the network device.

In some embodiments, the first configuration information includes reference signal resource configuration information. Illustratively, the reference signal resource configuration information is information used to configure relevant parameters and an allocation manner of a reference signal in a wireless communication system, where the reference signal is an important signal for a UE for signal reception and demodulation, and the reference signal resource configuration information includes frequency resource configuration, time domain configuration, and antenna port configuration of the reference signal, a corresponding mapping relationship therebetween, and the like. By means of the reference signal resource configuration information, it is possible to implement allocation and scheduling of the reference signal, so as to ensure normal operation of the wireless network, thereby improving communication efficiency and performance. In a wireless communication system, the reference signal resource configuration information is generally transmitted by a base station to a UE through signaling broadcasting, and may be dynamically adjusted according to different radio resource configuration manners, so as to satisfy different communication requirements and network optimization.

In some embodiments, the name of the reference signal resource configuration information is not limited, and it may be, for example, "configuration information", "resource indication information", "reference signal indication information", or the like.

For optional implementations of step S4101, reference may be made to the optional implementation of step S2101 in FIG. 2, as well as other related parts in the embodiments involved in FIG. 2, which will not be elaborated herein.

Step S4102: Receiving the first configuration information transmitted by the network device.

In some embodiments, the power information includes first power information, including layer 1 reference signal received power (L1-RSRP) information or layer 1 signal to interference noise ratio (L1-SINR) information.

In some embodiments, the power information includes a first index and an absolute value of the first power information, where the first index is an index of a port corresponding to a strongest instance of the first power information or an index of a port group corresponding to the strongest instance of the first power information, among at least one instance of the first power information included in the power information, and the absolute value of the first power information is an absolute value of the strongest instance of the first power information.

In some embodiments, the power information includes a relative value of the first power information, the relative value of the first power information is a relative value of first power information between the strongest instance of the first power information and any other instance of the first power information, among the at least one instance of the first power information included in the power information, and the relative value of the first power information corresponds to a second index including an index of a port or an index of a port group.

In some embodiments, the power information includes the second index.

In some embodiments, the power information includes at least one relative value of the first power information, and a bit position of the relative value of the first power information in the power information is determined based on the second index corresponding to the relative value of the first power information.

In some embodiments, the power information excludes second power information, where the second power information is first power information with a value less than or equal to a first threshold.

In some embodiments, the power information includes first bit sequence information, configured to indicate a reporting status of the at least one instance of the first power information corresponding to at least one index respectively, where the at least one index includes a port index or a port group index.

In some embodiments, the power information includes an amplitude coefficient.

In some embodiments, the power information includes a first index being an index corresponding to a port or a port group having a largest amplitude coefficient.

In some embodiments, the amplitude coefficient includes a second amplitude coefficient, the second amplitude coefficient corresponds to a second index, the second index is an index other than the first index, among at least one index, and the second index includes an index of a port or an index of a port group.

In some embodiments, a bit position of the second amplitude coefficient in the power information is determined based on the second index corresponding to the second amplitude coefficient.

In some embodiments, the power information excludes a third amplitude coefficient, where the third amplitude coefficient is an amplitude coefficient less than or equal to a second threshold.

In some embodiments, the power information includes second bit sequence information, configured to indicate a reporting status of an amplitude coefficient corresponding to an index among at least one index, where the index includes an index of a port or an index of a port group.

In some embodiments, the power information is contained in first precoding matrix indicator (PMI) information of a channel state information (CSI) report.

In some embodiments, the power information is contained in second PMI information of a type I codebook and/or the power information is contained in second PMI information of a type II codebook.

In some embodiments, a first report corresponding to the power information and a PMI report are independent of each other.

In some embodiments, the power information is contained in a beam report.

For optional implementations of step S4102, reference may be made to the optional implementation of steps S2102 and S2103 in FIG. 2, as well as other related parts in the embodiments involved in FIG. 2, which will not be elaborated herein.

According to the above solutions, a network device transmits to a terminal the first configuration information including the reference signal resource configuration information, where a reference signal resource configured by the reference signal resource configuration information corresponds to a plurality of ports or a plurality of port groups, and the first configuration information instructs the terminal to determine, based on the first configuration information, the power information of at least one port among the plurality of ports or of at least one port group among the plurality of port groups, and transmit the power information to the network device. In this way, by reporting, by the terminal, the power information of each port, the network device determines, based on the power information, a channel state between each port and the terminal, such that the network device can perform power allocation for different ports based on the channel state, thereby improving transmission performance of the terminal.

FIG. 5 is a flowchart illustrating a power information reporting method according to an embodiment of the present disclosure. As shown in FIG. 5, embodiments of the disclosure relate to a power information reporting method, which includes the followings steps.

Step S5101: Receiving first configuration information.

In some embodiments, the first configuration information includes the reference signal resource configuration information, where a reference signal resource configured by the reference signal resource configuration information corresponds to a plurality of ports or a plurality of port groups.

Step S5102: Acquiring the power information of at least one port among the plurality of ports or of at least one port group among the plurality of port groups to which the reference signal resource corresponds.

Illustratively, upon receiving the first configuration information, the terminal determines, based on the first configuration information, the plurality of ports or the plurality of port groups to which the reference signal resource configured by the reference signal resource configuration information corresponds, and acquires the power information of at least one port among the plurality of ports or of at least one port group among the plurality of port groups.

In some embodiments, the power information includes first power information, which includes L1-RSRP information or L1-SINR information.

In some embodiments, the power information reported by the terminal includes a first index of a port corresponding to the strongest instance of the first power information and an absolute value of the strongest instance of the first power information. Illustratively, the absolute value of L1-RSRP or the absolute value of L1-SINR may be quantized by 7-bit.

In some embodiments, the power information reported by the terminal includes a relative value of the strongest instance of L1-RSRP and an instance of L1-RSRP corresponding to another port.

Illustratively, the relative value of the L1-RSRP is quantized by 7-bit, where the index of other port may not be reported, and it only needs to arrange the bit positions corresponding to the L1-RSRPs in an ascending order of the port indexes. For example, in case that the terminal corresponds to 8 ports, port#0, port#1, port#2, port#3, port#4, port#5, port#6, and port#7, and the strongest port is port#4, the order of the bit information then may be: the index of the strongest port (#4), the absolute value of the strongest L1-RSRP, the relative value of port#0, the relative value of port#1, the relative value of port#2, the relative value of port#3, the relative value of port#5, the relative value of port#6, and the relative value of port#7. In this case, the relative values of port#x, the more forward one represents a lower bit position.

In some embodiments, an L1-RSRP that is lower than a first threshold may not be reported, or may be quantized to the threshold.

Illustratively, if the L1-RSRPs respectively corresponding to some port indexes are not reported, then bit information is needed to indicate which port indexes' L1-RSRP is reported and which port indexes' L1-RSRP is not reported. The length of this bit sequence may be the total number of ports or the total number of ports minus 1. In case that the length of the bit sequence is the total number of ports, that is, each port corresponds to 1 bit, "1" identifies that the corresponding L1-RSRP is reported, while "0" identifies that the corresponding L1-RSRP is not reported. In case that the length of the bit sequence is the total number of ports minus 1, that is, the port index corresponding to the strongest L1-RSRP has been reported, this bit may be omitted in this case. Illustratively, there are 8 ports in total, port#0, port#1, port#2, port#3, port#4, port#5, port#6, and port#7, with the strongest port being port#4, where port#0 and port#7 are not reported, and the bit information order #1 is: the index of the strongest port (#4), the absolute value of the strongest L1-RSRP, the bit sequence indicating which port indexes are reported, the relative value of port#1, the relative value of port#2, the relative value of port#3, the relative value of port#5, and the relative value of port#6, where a relative value (of port#x) that is arranged earlier in the power information corresponds to a port with a smaller port index.

Optionally, the bit information order #2 may be as follows: the bit sequence indicating which port indexes are reported, the index of the strongest port (#4), the absolute value of the strongest L1-RSRP, the relative value of port#1, the relative value of port#2, the relative value of port#3, the relative value of port#5, and the relative value of port#6.

It should be noted that the difference between order #2 and order #1 lies in that, in order #2, the bit sequence indicating which port indexes are reported comes first. Therefore, this bit sequence needs to include the index of the strongest port. Since the index of the strongest port is indicated after the bit sequence, the number of bits required for indicating the index of the strongest port may be reduced, because it only needs to be selected from the ports that are actually reported. For example, if order #2 indicates that only 4 ports are to be reported, the index of the strongest port requires only 2 bits, i.e., it is selected from the 4 reported ports. In contrast, in order #1, since the index of the strongest port is placed before the bit sequence, it requires 3 bits to select from all 8 ports. In that case, the bit sequence, for indicating which ports will be subsequently reported, may be shortened by one bit.

In some embodiments, the power information includes an amplitude coefficient. That is, the absolute value is not reported, but it only needs to inform the base station of the ratio value of the power corresponding to each port index. Illustratively, the port index corresponding to the port having the largest amplitude coefficient is reported, where the largest amplitude coefficient is up to 1. The number of bits required for the port index is related to the total number of ports (8 ports correspond to 3 bits). The amplitude coefficients corresponding to the other ports are all less than 1.

In some embodiments, what values the amplitude coefficients corresponding to the other ports may be quantized may be set by a protocol. For example, the second amplitude coefficient may be quantized into: ${\left(\frac{1}{64}\right)}^{1 / 2} , {\left(\frac{1}{32}\right)}^{1 / 2} , {\left(\frac{1}{16}\right)}^{1 / 2}$, ${\left(\frac{1}{8}\right)}^{1 / 2} , {\left(\frac{1}{4}\right)}^{1 / 2} , {\left(\frac{1}{2}\right)}^{1 / 2}$, and 0. Different bit values are used to correspond to different second amplitude coefficients. The bit position of the second amplitude coefficient in the power information is determined based on the second index corresponding to the second amplitude coefficient.

In some embodiments, in case that there is the amplitude coefficient that is not reported, it may also report a bit sequence first to indicate which ports' amplitude coefficients are to be reported and which ports' amplitude coefficients are not to be reported. The difference between this reporting order and that of the foregoing L1-RSRP information is that the L1-RSRP absolute value is not included. For example, in case that the terminal corresponds to 8 ports, port#0, port#1, port#2, port#3, port#4, port#5, port#6, and port#7, with the strongest port is port#4, then: (1) if all are reported, the reporting order is: the index of the strongest port (#4), the amplitude coefficient of port#0, the amplitude coefficient of port#1, the amplitude coefficient of port#2, the amplitude coefficient of port#3, the amplitude coefficient of port#5, the amplitude coefficient of port#6, and the amplitude coefficient of port#7; (2) if some amplitude coefficients may not be reported, for example, the amplitude coefficients of port#0 and port#7 are lower than the second threshold, then the amplitude coefficients of port#0 and port#7 are not reported, and thus the bit information order #1 may be as follows: the index of the strongest port (#4), a bit sequence indicating which port indexes are reported, the amplitude coefficient of port#1, the amplitude coefficient of port#2, the amplitude coefficient of port#3, the amplitude coefficient of port#5, and the amplitude coefficient of port#6. Alternatively, the bit information order #2 may also be as follows: a bit sequence indicating which port indexes are reported, the index of the strongest port (#4), the amplitude coefficient of port#1, the amplitude coefficient of port#2, the amplitude coefficient of port#3, the amplitude coefficient of port#5, and the amplitude coefficient of port#6.

In some embodiments, the power information is contained in PMI information of a CSI report.

In some embodiments, the power information is contained in PMI information of a type I codebook and/or a type II codebook.

In some embodiments, a report corresponding to the power information and a PMI report are independent of each other.

In some embodiments, the power information is contained in a beam report.

Step S5103: Transmitting the power information to the network device.

Illustratively, upon determining the foregoing power information, the terminal transmits the power information to the network device, such that the network device can determine, based on the power information, channel states between different ports and the terminal, and can perform reasonable power allocation among the different ports based on the channel state, so as to fully utilize the communication channel and improve the transmission performance of the near-field terminal.

In the foregoing solution, by the terminal reporting the power information corresponding to each port, the base station is provided with channel state information between different ports and the terminal, enabling the base station to better perform power allocation among different ports, thereby improving the transmission performance of the near-field terminal.

In the embodiments of the disclosure, further provided is a device for implementing any one of the above methods. For example, there is provided a device including units or modules for implementing the steps executed by the terminal in any one of the above methods. As another example, there is provided another device including units or modules for implementing the steps executed by the network device (such as an access network device, a core network function node, a core network device, etc.) in any one of the above methods.

It should be noted that the division of the units or modules in the above device is only a division of logical functions, and in actual implementation, they may be fully or partially integrated into one physical entity, or they may be physically separated. In addition, the units or modules in the device may be implemented in the form of a processor calling software. For example, the device includes a processor, the processor is connected to a memory, and instructions are stored in the memory. The processor calls the instructions stored in the memory to implement any of the above methods or implement the functions of the units or modules of the above device. The processor is, for example, a general-purpose processor, such as a central processing unit (CPU) or a microprocessor, and the memory is a memory inside the device or a memory outside the device. For example, the units or modules in the device may be implemented in the form of hardware circuits, and the functions of some or all of the units or modules may be realized by designing the hardware circuits. The above hardware circuits may be one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit may be realized by a programmable logic device (PLD), taking a field programmable gate array (FPGA) as an example, which may include a large number of logic gate circuits, and the connection relationship between the logic gate circuits is configured by a configuration file, to realize the functions of some or all of the above units or modules. All units or modules of the above devices may be realized in the form of a processor calling software, in the form of a hardware circuit, or in part by a processor calling software, and the rest by a hardware circuit.

In the embodiments of the disclosure, the processor is a circuit with signal processing capability. In one implementation, the processor may be a circuit with instruction reading and running capability, such as a central processing unit (CPU), a microprocessor, a graphics processing unit (GPU) (which may be a microprocessor), or a digital signal processor (DSP). In another implementation, the processor may implement certain functions through the logical relationship of a hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the process of the processor loading a configuration document to implement the hardware circuit configuration may be the process of the processor loading instructions to implement the functions of some or all of the above units or modules. In addition, it may also be a hardware circuit designed for artificial intelligence, which may be an ASIC, such as a neural network processing unit (NPU), a tensor processing unit (TPU), a deep learning processing unit (DPU).

FIG. 6 is a block diagram illustrating a structure of a terminal according to an embodiment of the present disclosure. As shown in FIG. 6, a terminal 6100 may include a first transceiver module 6101, a processing module 6102, and a second transceiver module 6103. In some embodiments, the first transceiver module 6101 is configured to receive first configuration information transmitted by a network device, where the first configuration information includes reference signal resource configuration information, and a reference signal resource configured by the reference signal resource configuration information corresponds to a plurality of ports or a plurality of port groups; the processing module 6102 is configured to determine power information of at least one port among the plurality of ports or of at least one port group among the plurality of port groups; and the second transceiver module 6103 is configured to transmit the power information to the network device. Optionally, the first transceiver module 6101 and the second transceiver module 6103 are configured to perform at least one of the communication steps such as the transmitting and/or receiving-related steps performed by the terminal 101 in any of the above methods, and the processing module 6102 is configured to perform at least one of the communication steps such as processing, generating, and executing performed by the terminal 101 in any of the above methods, and details are not repeated herein.

In some embodiments, the first transceiver module 6101 and the second transceiver module 6103 may include a transmitting module and/or a receiving module, which may be separate or integrated together. Optionally, the transceiver module may be interchangeable with a transceiver.

In some embodiments, the processing module 6102 may be interchanged with an execution module.

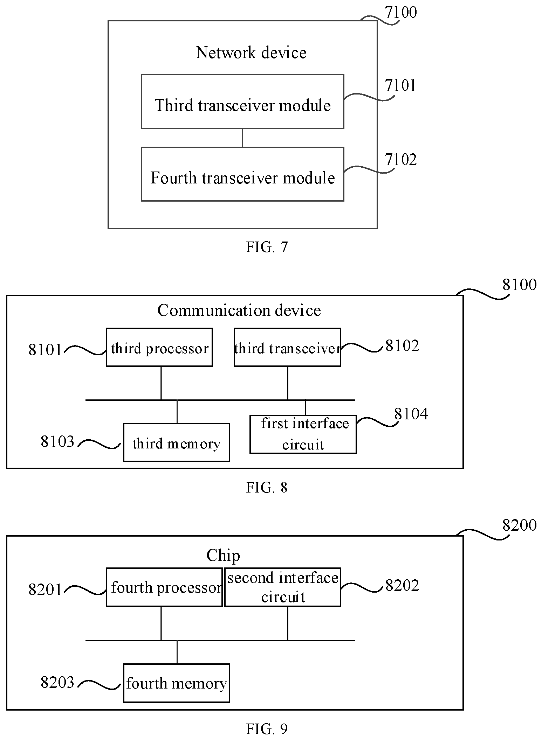

FIG. 7 is a block diagram illustrating a structure of a network device according to an embodiment of the present disclosure. As shown in FIG. 7, a network device 7100 may include a third transceiver module 7101 and a fourth transceiver module 7102. In some embodiments, the third transceiver module 7101 is configured to transmit first configuration information to a terminal, where the first configuration information includes reference signal resource configuration information, a reference signal resource configured by the reference signal resource configuration information corresponds to a plurality of ports or a plurality of port groups, and the first configuration information is configured to instruct the terminal to determine power information of at least one port among the plurality of ports or of at least one port group among the plurality of port groups; and the fourth transceiver module 7102 is configured to receive the power information transmitted by the terminal. Optionally, the second transceiver module 7101 is configured to perform at least one of the communication steps such as transmitting and/or receiving performed by the network device 102 in any of the above methods, and details are not repeated herein.

In some embodiments, the third transceiver module 7101 and the fourth transceiver module 7102 may include a transmitting module and/or a receiving module, which may be separate or integrated together. Optionally, the transceiver module may be interchangeable with a transceiver.

FIG. 8 is a schematic diagram illustrating a structure of a communication device 8100 according to an embodiment of the disclosure. The communication device 8100 may be a network device (e.g., an access network device, a core network device, etc.), a terminal (e.g., a user device, etc.), a chip, chip system or processor that supports a network device to implement any of the above methods, or a chip, chip system or processor that supports a terminal to implement any of the above methods. The communication device 8100 may be configured to implement the methods described in the above method embodiments, and for the details, reference may be made the description in the above method embodiments.

As illustrated in FIG. 8, the communication device 8100 includes one or more third processors 8101. The third processor 8101 may be a general-purpose processor or a dedicated processor, for example, a baseband processor or a central processing unit. The baseband processor may be configured to process the communication protocol and the communication data, and the central processing unit may be configured to control the communication device (such as a base station, a baseband chip, a terminal device, a terminal device chip, a DU or a CU), execute a program, and process the data of the program. Optionally, the communication device 8100 is configured to execute any of the above methods. Optionally, one or more third processors 8101 are configured to call instructions such that the communication device 8100 performs any of the above methods.

In some embodiments, the communication device 8100 further includes one or more third transceivers 8102. When the communication device 8100 includes one or more third transceivers 8102, the one or more third transceivers 8102 perform at least one of the communication steps such as the transmitting and/or receiving steps in any of the above methods, and the third processor 8101 performs at least one of the other steps. In optional embodiments, the transceiver may include a receiver and/or a transmitter, and the receiver and the transmitter may be separate or integrated. Optionally, terms such as "transceiver," "transceiver unit," "transceiver machine," "transceiver circuit," "interface circuit," "interface", etc. may be replaced with each other; the terms such as "receiver," "receiving unit," "receiver machine" and "receiving circuit", etc. may be replaced with each other.

In some embodiments, the communication device 8100 further includes one or more third memories 8103 for storing data. Optionally, all or some of third memories 8103 may also be external to the communication device 8100. In optional embodiments, the communication device 8100 may include one or more first interface circuits 8104. Optionally, the first interface circuits 8104 are connected to the third memory 8103, and the first interface circuits 8104 may be configured to receive data from the third memory 8103 or other devices, and may be configured to transmit data to the third processor 8101 or other devices. For example, the first interface circuits 8104 may read data stored in the third memory 8103 and transmit the data to the third processor 8101.

The communication device 8100 according to the above embodiments may be a network device or a terminal, but the scope of the communication device 8100 according to the disclosure is not limited thereto, and the structure of the communication device 8100 may not be limited by FIG. 8. The communication device may be an independent device or may be part of a larger device. For example, the communication device may be: 1) an independent integrated circuit IC, or a chip, or a chip system or subsystem; (2) an IC collection including one or more ICs, for example, the above IC collection may also include a storage component for storing data and programs; (3) an ASIC, such as a modem; (4) a module that may be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, or the like; (6) others.

FIG. 9 is a schematic diagram illustrating a structure of a chip 8200 according to an embodiment of the disclosure. In the case where the communication device 8100 may be a chip or a chip system, reference may be made to the schematic diagram of the structure of the chip 8200 illustrated in FIG. 9, but the disclosure is not limited thereto.

The chip 8200 includes one or more fourth processors 8201. The chip 8200 is configured to execute any of the methods above.

In some embodiments, the chip 8200 further includes one or more second interface circuits 8202. Optionally, terms such as "interface circuit," "interface," "transceiver pin" and the like may be interchangeable. In some embodiments, the chip 8200 further includes one or more fourth memories 8203 for storing data. Optionally, all or some of the fourth memories 8203 may be external to the chip 8200. Optionally, the second interface circuits 8202 are connected to the fourth memories 8203, and the second interface circuits 8202 may be configured to receive data from the fourth memories 8203 or other devices, and the second interface circuits 8202 may be configured to transmit data to the fourth memories 8203 or other devices. For example, the second interface circuits 8202 may read data stored in the fourth memories 8203 and transmit the data to the processor 8201.

In some embodiments, the second interface circuit 8202 performs at least one of the communication steps such as the transmitting and/or receiving steps in the above methods. For instance, the second interface circuit 8202 performing at least one of the transmitting and/or receiving-related steps in the above methods refers to that the second interface circuit 8202 performs data interaction between the fourth processor 8201, chip 8200, fourth memory 8203, or transceiver devices. In some embodiments, the fourth processor 8201 performs at least one of the other steps.

The modules and/or devices described in various embodiments such as virtual devices, physical devices, and chips may be arbitrarily combined or separated according to the situation. Optionally, some or all steps may also be executed collaboratively by multiple modules and/or devices, which is not limited here.

The disclosure also provides a storage medium, on which instructions are stored, and when the instructions are executed on the communication device 8100, the communication device 8100 performs any of the above methods. Optionally, the storage medium is an electronic storage medium. Optionally, the storage medium is, but is not limited to, a computer-readable storage medium, and it may also be a storage medium readable by other devices. Optionally, the storage medium may be, but is not limited to, a non-transitory storage medium, and it may also be a temporary storage medium.

The disclosure also provides a program product, and when the program product is executed by the communication device 8100, the communication device 8100 performs any of the above methods. Optionally, the program product is a computer program product.

The disclosure also provides a computer program, which, when executed on a computer, enables the computer to perform any one of the above methods.

## Claims

1. A power information reporting method, performed by a terminal, comprising:
receiving first configuration information transmitted by a network device, wherein the first configuration information comprises reference signal resource configuration information, and a reference signal resource configured by the reference signal resource configuration information corresponds to a plurality of ports or a plurality of port groups;
determining power information of at least one port among the plurality of ports or of at least one port group among the plurality of port groups; and
transmitting the power information to the network device.

2. The method according to claim 1, wherein the power information comprises first power information, comprising layer 1 reference signal received power (L1-RSRP) information or layer 1 signal to interference noise ratio (L1-SINR) information.

3. The method according to claim 2, wherein the power information comprises a first index and an absolute value of the first power information, wherein the first index is an index of a port corresponding to a strongest instance of the first power information or an index of a port group corresponding to the strongest instance of the first power information, among at least one instance of the first power information comprised in the power information, and the absolute value of the first power information is an absolute value of the strongest instance of the first power information.

4. The method according to claim 3, wherein the power information comprises a relative value of the first power information, the relative value of the first power information is a relative value of first power information between the strongest instance of the first power information and any other instance of the first power information, among the at least one instance of the first power information comprised in the power information, and the relative value of the first power information corresponds to a second index comprising an index of a port or an index of a port group.

5. The method according to claim 4, wherein the power information comprises the second index.

6. The method according to claim 5, wherein the power information comprises at least one relative value of the first power information, and a bit position of the relative value of the first power information in the power information is determined based on the second index corresponding to the relative value of the first power information.

7. The method according to claim 6, wherein the power information excludes second power information, wherein the second power information is first power information with a value less than or equal to a first threshold.

8. The method according to claim 7, wherein the power information comprises first bit sequence information, configured to indicate a reporting status of the at least one instance of the first power information corresponding to at least one index respectively, wherein the at least one index comprises a port index or a port group index.

9. The method according to claim 1, wherein the power information comprises an amplitude coefficient.

10. The method according to claim 9, wherein the power information comprises a first index being an index corresponding to a port or a port group having a largest amplitude coefficient.

11. The method according to claim 10, wherein the amplitude coefficient comprises a second amplitude coefficient, the second amplitude coefficient corresponds to a second index, the second index is an index other than the first index, among at least one index, and the second index comprises an index of a port or an index of a port group.

12. The method according to claim 11, wherein a bit position of the second amplitude coefficient in the power information is determined based on the second index corresponding to the second amplitude coefficient.

13. The method according to claim 9, wherein the power information excludes a third amplitude coefficient, wherein the third amplitude coefficient is an amplitude coefficient less than or equal to a second threshold.

14. The method according to claim 13, wherein the power information comprises second bit sequence information, configured to indicate a reporting status of an amplitude coefficient corresponding to an index among at least one index, wherein the index comprises an index of a port or an index of a port group.

15. The method according to any one of claims 1 to 14, wherein the power information is contained in first precoding matrix indicator (PMI) information of a channel state information (CSI) report.

16. The method according to any one of claims 1 to 14, wherein the power information is contained in second PMI information of a type I codebook and/or the power information is contained in second PMI information of a type II codebook.

17. The method according to any one of claims 1 to 14, wherein a first report corresponding to the power information and a PMI report are independent of each other.

18. The method according to any one of claims 1 to 14, wherein the power information is contained in a beam report.

19. A power information reporting method, performed by a network device, comprising:
transmitting first configuration information to a terminal, wherein the first configuration information comprises reference signal resource configuration information, a reference signal resource configured by the reference signal resource configuration information corresponds to a plurality of ports or a plurality of port groups, and the first configuration information is configured to instruct the terminal to determine power information of at least one port among the plurality of ports or of at least one port group among the plurality of port groups; and
receiving the power information transmitted by the terminal.

20. The method according to claim 19, wherein the power information comprises first power information, comprising layer 1 reference signal received power (L1-RSRP) information or layer 1 signal to interference noise ratio (L1-SINR) information.

21. The method according to claim 20, wherein the power information comprises a first index and an absolute value of the first power information, wherein the first index is an index of a port corresponding to a strongest instance of the first power information or an index of a port group corresponding to the strongest instance of the first power information, among at least one instance of the first power information comprised in the power information, and the absolute value of the first power information is an absolute value of the strongest instance of the first power information.

22. The method according to claim 21, wherein the power information comprises a relative value of the first power information, the relative value of the first power information is a relative value of first power information between the strongest instance of the first power information and any other instance of the first power information, among the at least one instance of the first power information comprised in the power information, and the relative value of the first power information corresponds to a second index comprising an index of a port or an index of a port group.

23. The method according to claim 22, wherein the power information comprises the second index.

24. The method according to claim 23, wherein the power information comprises at least one relative value of the first power information, and a bit position of the relative value of the first power information in the power information is determined based on the second index corresponding to the relative value of the first power information.

25. The method according to claim 24, wherein the power information excludes second power information, wherein the second power information is first power information with a value less than or equal to a first threshold.

26. The method according to claim 25, wherein the power information comprises first bit sequence information, configured to indicate a reporting status of the at least one instance of the first power information corresponding to at least one index respectively, wherein the at least one index comprises a port index or a port group index.

27. The method according to claim 19, wherein the power information comprises an amplitude coefficient.

28. The method according to claim 27, wherein the power information comprises a first index being an index corresponding to a port or a port group having a largest amplitude coefficient.

29. The method according to claim 28, wherein the amplitude coefficient comprises a second amplitude coefficient, the second amplitude coefficient corresponds to a second index, the second index is an index other than the first index, among at least one index, and the second index comprises an index of a port or an index of a port group.

30. The method according to claim 29, wherein a bit position of the second amplitude coefficient in the power information is determined based on the second index corresponding to the second amplitude coefficient.

31. The method according to claim 27, wherein the power information excludes a third amplitude coefficient, wherein the third amplitude coefficient is an amplitude coefficient less than or equal to a second threshold.

32. The method according to claim 30, wherein the power information comprises second bit sequence information, configured to indicate a reporting status of an amplitude coefficient corresponding to an index among at least one index, wherein the index comprises an index of a port or an index of a port group.

33. The method according to any one of claims 19 to 32, wherein the power information is contained in first precoding matrix indicator (PMI) information of a channel state information (CSI) report.

34. The method according to any one of claims 19 to 32, wherein the power information is contained in second PMI information of a type I codebook and/or the power information is contained in second PMI information of a type II codebook.

35. The method according to any one of claims 19 to 32, wherein a first report corresponding to the power information and a PMI report are independent of each other.

36. The method according to any one of claims 19 to 32, wherein the power information is contained in a beam report.

37. A power information reporting method, comprising:
transmitting, by a network device, first configuration information to a terminal, wherein the first configuration information comprises reference signal resource configuration information, and a reference signal resource configured by the reference signal resource configuration information corresponds to a plurality of ports or a plurality of port groups;
determining, by the terminal, power information of at least one port among the plurality of ports or of at least one port group among the plurality of port groups; and
transmitting, by the terminal, the power information to the network device.

38. A terminal, comprising:
a first transceiver module, configured to receive first configuration information transmitted by a network device, wherein the first configuration information comprises reference signal resource configuration information, and a reference signal resource configured by the reference signal resource configuration information corresponds to a plurality of ports or a plurality of port groups;
a processing module, configured to determine power information of at least one port among the plurality of ports or of at least one port group among the plurality of port groups; and
a second transceiver module, configured to transmit the power information to the network device.

39. A network device, comprising:
a third transceiver module, configured to transmit first configuration information to a terminal, wherein the first configuration information comprises reference signal resource configuration information, a reference signal resource configured by the reference signal resource configuration information corresponds to a plurality of ports or a plurality of port groups, and the first configuration information is configured to instruct the terminal to determine power information of at least one port among the plurality of ports or of at least one port group among the plurality of port groups; and
a fourth transceiver module, configured to receive the power information transmitted by the terminal.

40. A terminal, comprising:
one or more processors,
wherein the terminal is configured to perform the power information reporting method according to any one of claims 1 to 18.

41. A network device, comprising:
one or more processors,
wherein the network device is configured to perform the power information reporting method according to any one of claims 19 to 36.42. A communication system, comprising a terminal and a network device, wherein the terminal is configured to implement the power information reporting method according to any one of claims 1 to 18, and the network device is configured to implement the power information reporting method according to any one of claims 19 to 36.

42. A communication system, comprising a terminal and a network device, wherein the terminal is configured to implement the power information reporting method according to any one of claims 1 to 18, and the network device is configured to implement the power information reporting method according to any one of claims 19 to 36.

43. A storage medium having instructions stored therein that, when executed on a communication device, cause the communication device to perform the power information reporting method according to any one of claims 1 to 18, or cause the communication device to perform the power information reporting method according to any one of claims 19 to 36.

44. A computer program product comprising a computer program and/or instructions that, when executed by a communication device, the communication device implements the power information reporting method according to any one of claims 1 to 18 or claims 19 to 36.
